# EUROPEAN PATENT SPECIFICATION

(11) **EP 2 279 669 B1**
(45) Date of publication and mention of the grant of the patent: **06.09.2017**
(21) Application number: 10170409.6
(22) Date of filing: 22.07.2010
(51) Int. Cl.: A23G 9/30

(54) **MACHINE FOR MAKING AND DISPENSING FOOD PRODUCTS, SUCH AS ICE CREAM PRODUCTS, CAKE AND PASTRY FILLINGS AND THE LIKE**
MASCHINE ZUR HERSTELLUNG UND ABGABE VON NAHRUNGSMITTELPRODUKTEN WIE EISCREMEPRODUKTE, KUCHEN UND TEIGWARENFÜLLUNGEN UND DERGLEICHEN
MACHINE POUR LA FABRICATION ET LA DISTRIBUTION DE PRODUITS ALIMENTAIRES TELS DES GLACES, DES GÂTEAUX ET GARNITURES DE TARTE ET PRODUITS SIMILAIRES

(30) Priority: 31.07.2009 IT BO20090517
(43) Date of publication of application: 02.02.2011
(73) Proprietor: Carpigiani Group - ALI S.p.A., 40011 Anzola Dell'Emilia (BO) (IT)
(72) Inventor: Lazzarini, Roberto, 40011 Anzola Dell'Emilia (Bologna) (IT); Cocchi, Gino, 40011 Anzola Dell'Emilia (Bologna) (IT); Zaniboni, Gianni, 40011 Anzola Dell'Emilia (Bologna) (IT)
(74) Representative: Milli, Simone

(56) References cited:
- EP-A1- 0 495 211
- EP-A2- 1 716 760
- US-A- 4 740 088

## Description

This invention relates to a machine for making and dispensing food products, such as ice cream products, cake and pastry fillings and the like. This invention refers, in particular, to machines for making and dispensing ice creams, granitas, slush drinks, custards, sauces, semi-liquid chocolate, yoghurts, jellies and the like, and also to pasteurizers for ice cream mixes and similar products.

A prior art machine of this type, in its most generic form, is described in European patent EP 0 495 211, in the name of the same applicant.

For example, the machine described in European patent EP 0 495 211 comprises a chamber for processing the product to be dispensed, means of thermal treatment connected to the chamber and a stirrer located inside the chamber for stirring the product being processed. The processing chamber is formed by a cylinder with a horizontal axis and communicates with an upper hopper for loading the ingredients to be processed and with a lower outlet for discharging the finished product.

The hopper, the processing chamber and the discharge outlet need frequent cleaning to prevent product residues or stagnation favouring the development of pathogenic germs. For this purpose, machines of this type are generally equipped with a sprayhead equipped with a hose which is extractable from the front or upper panel of the machine. The sprayhead, with an adjustable flow rate, is connected to the water supply network to allow washing with water, preferably hot, of the hopper, the processing chamber and the discharge outlet. Although the sprayhead described above is advantageously simple, economic and easy to use, it is not very effective as its sanitising action is quite mild. **Other examples of machines of this kind can be found in documents** EP1716760 **and** EP4740088.

The aim of this invention is to provide a machine for making and dispensing food products, such as ice cream products, cake and pastry fillings and the like, which is equipped with an effective washing and sanitising device and, at the same time, is simple, economic and easy to use.

This aim is achieved by this invention by a machine for making and dispensing food products, such as ice cream products, cake and pastry fillings and the like, comprising the characteristics described in one or more of the claims below. The technical features of the invention, with reference to the above aim, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figure 1 is a schematic perspective view of a machine according to this invention, for making and dispensing food products, such as ice cream products, cake and pastry fillings and the like;
- Figure 2 is a side view of some details of the machine of Figure 1, with parts in cross section and parts cut away for clarity;
- Figure 3 shows a perspective internal view of a detail of the machine of Figure 1;
- Figure 4 is block diagram of a washing and sanitising device fitted to the machine of Figure 1; and
- Figure 5 illustrates a schematic perspective view of a machine according to this invention, for pasteurising food products, such as, for example, ice cream mixes.

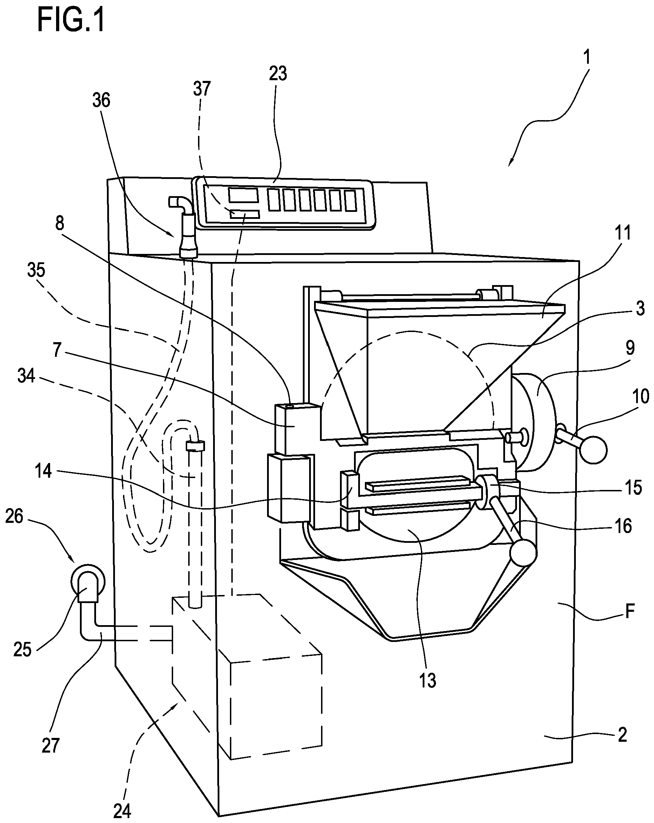

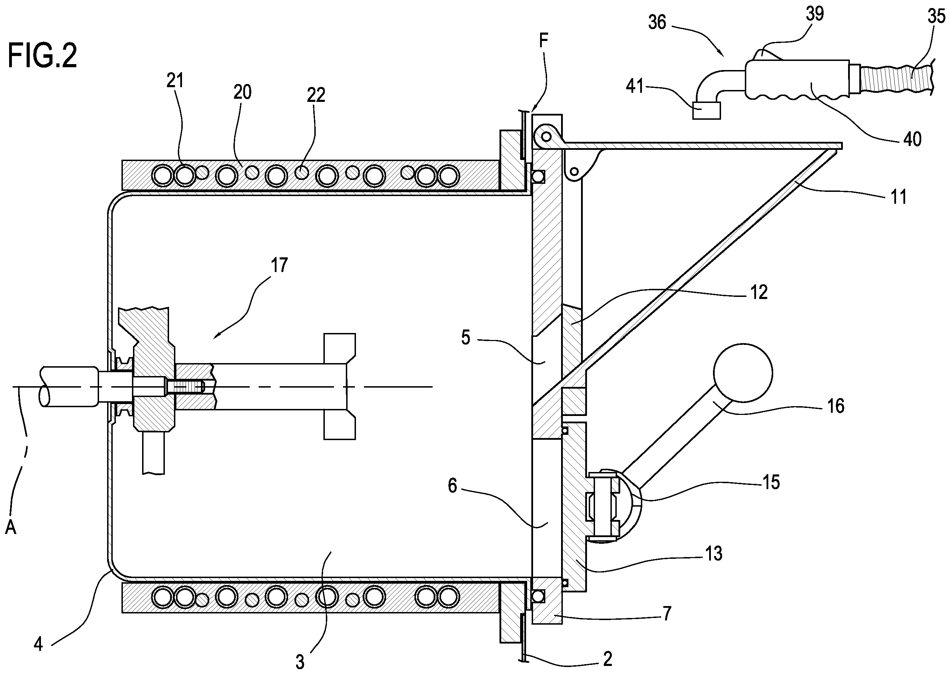

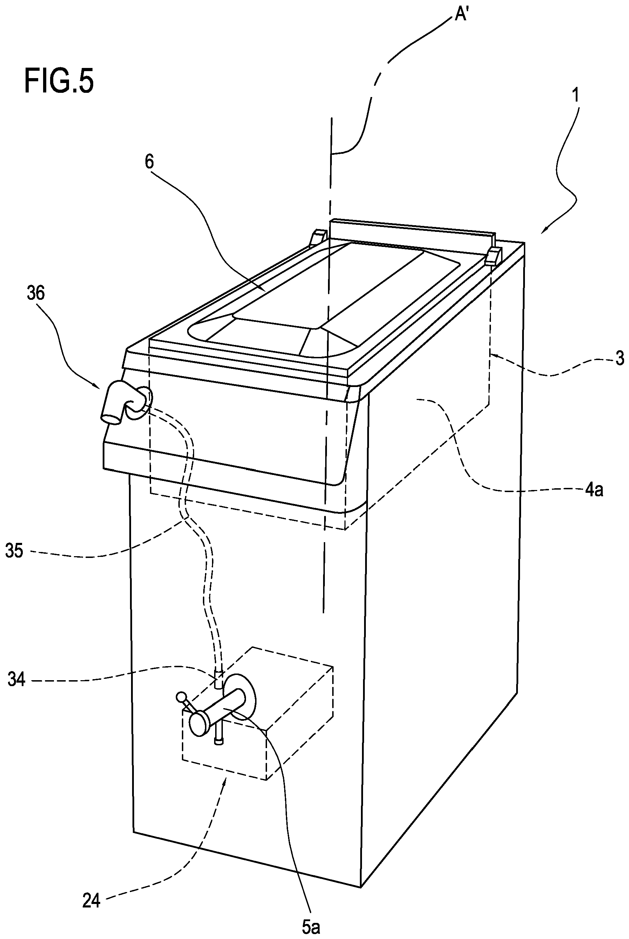

With reference to figures 1 and 2, the numeral 1 denotes in its entirety a machine for making and dispensing food products, such as ice cream products, cake and pastry fillings and the like. These products may be, for example, ice creams, granitas, slush drinks, custards, sauces, semi-liquid chocolate, yoghurts, jellies and the like, as well as, in the case of Figure 5, ice cream mixes to be pasteurised.

The machine 1 comprises an outer, load-bearing, box-shaped casing 2, substantially parallelepiped in shape, inside of which is housed a chamber 3 for processing the product to be dispensed.

The processing chamber 3 is formed in part by a cylinder 4 with a horizontal axis A (Figure 2) and having an upper opening 5 for loading the ingredients to be processed and a lower outlet 6 for discharging the finished product.

The cylinder 4 is open towards the front F of the machine 1, at which it is supported in a cantilever manner by the casing 2.

The front opening of the cylinder 4 is, when in use, sealed closed by an openable door 7, which, together with the cylinder 4, forms the chamber 3. The door 7 is hinged to the front F by a vertical axis hinge 8.

When in use, the door 7 is kept in the closed position by a releasable locking device 9, positioned on the opposite side of the hinge 8 and able to be operated by a lever 10.

The loading opening 5 is formed in the door 7 and it communicates with a loading hopper 11 supported by the door 7.

The hopper 11 is equipped with a door 12 for closing the opening 5.

The discharge outlet 6 is also formed in the door 7 and it is opened or sealed closed by an openable door 13, which is hinged to the door 7 by a vertical axis hinge 14.

The door 13 is kept in the closed position by a releasable locking device 15, positioned on the opposite side of the hinge 14 and actionable by a lever 16.

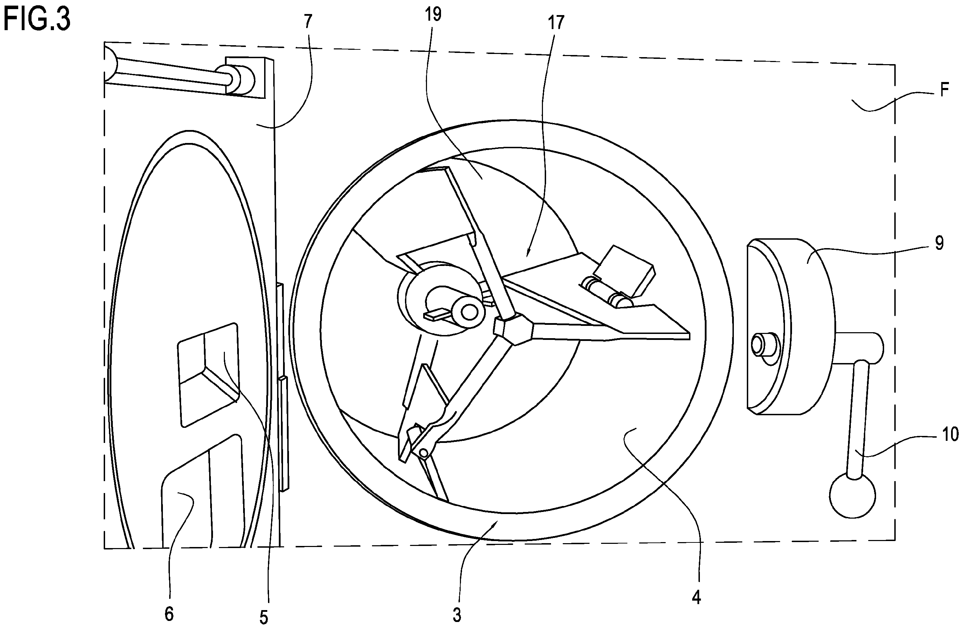

As better illustrated in Figure 3, the inside of the cylinder 4 is fitted with an interchangeable stirrer 17, the design of which depends on the type of product being processed that must be stirred, that is, in other words, on the finished product to be obtained.

In particular, the stirrer 17 shown in Figure 3 is of a known type for the production of ice creams. The stirrer 17 is rotated around the axis A according to a predetermined program by a motor-driven shaft 18 which extends coaxially inside the cylinder 4 through a base wall 19 of this cylinder. A tubular thermal treatment block 20 extends around the lateral wall of the cylinder 4.

A coil 21 forming the evaporator of a cooling circuit is embedded in block 20. The other components of this cooling circuit, contained in the casing 2, are not illustrated since it is of a known type.

An electrical resistor 22 of a heating system is also embedded in block 20. Again, the other components of this heating system, contained in the casing 2, are not illustrated since it is of a known type.

The turns of the electrical resistor 22 are uniformly distributed along the axis A and alternated with the turns of the coil 21.

The presence of both the cooling circuit and the heating system makes preparing different products possible, from those which require at least one heating cycle, such as, for example, semi-liquid chocolate, to those which require at least one cooling cycle, such as, for example, ice creams. For this purpose, the machine 1 is equipped with an electronic device for controlling the operational steps on the basis of predetermined or programmable recipes. This control device is equipped with a user interface console 23, shown in Figure 1 and of a known type.

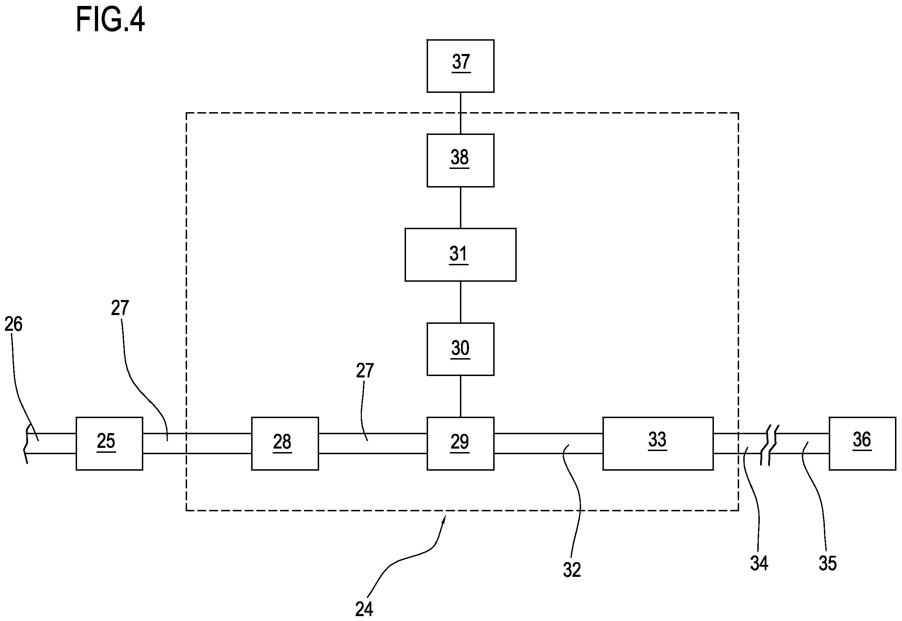

The machine 1 also comprises the manual washing and sanitising device 24, shown schematically in Figure 1 and, in a block diagram, in Figure 4

The device 24 comprises an inlet 25 connected to a water supply network 26 or to another source of water.

The inlet 25 feeds the water, through a pipe 27 along which a flow adjustment device 28 is fitted, to a solenoid valve 29, the electrical section 30 of which is under the control of a control unit 31 to control the supplying of the water from pipe 27 to a pipe 32 for feeding a steam production boiler 33.

The boiler 33, housed in the casing 2, is equipped with a steam inlet, which is connected through a pipe 34 to a hose 35 for feeding a steam dispenser gun 36.

The hose 35, which is a flexible element, is extractable from the casing 2, in particular from the upper front F of the machine 1. The step of cleaning and sterilising the machine 1 includes the sending of pressurised steam, saturated or super-heated, into the hopper 11, inside the chamber 3 (through the opening of the door 7), and on the door 7 itself in order to sanitise both the loading opening 5 and the discharge outlet 6, as well as the doors 12 and 13. The cleaning and sterilisation step is started by the operator by pressing button 37 on the console 23.

The button 37 is electrically connected to a timer 38 which is activated to start steam production. The timer 38 acts in turn, through the control unit 31, initially on the electrical resistors (not illustrated) of the boiler 33 and subsequently, when the boiler 33 has reached the required temperature, on the solenoid valve 29 to control the supplying of water to the boiler 33 and, therefore, the conditions of forming and supplying the steam to the gun 36.

The timer 38 and the control unit 31 operate on the resistors of the boiler 33 and on the solenoid valve 29 in order to guarantee a supply of steam to the gun 36 at a particular pressure and at a particular temperature.

This temperature, equal to at least 100°C, is preferably higher than 120°C.

As well as being equipped with a dispensing valve able to be operated by a button 39, the gun 36 is equipped with a thermally insulated handle 40 for a comfortable and safe grip by the user.

In addition, the dispensing outlet of the gun 36 may be equipped with a brush 41 which facilitates removing product residue from the parts to be cleaned and sterilised. In this way, the steam efficiently removes the residual product since it flows under pressure from the gun 36 in a concentrated jet; in addition, the thermal and mechanical action of the pressurised steam is assisted by the mechanical action of the brush 41 to provide an even more effective cleaning.

As illustrated in Figure 5, the machine 1 is a pasteurizer for ice cream mixes, which has the processing chamber 3 formed partly by a tank 4a with a vertical axis A' and has an upper opening 5 for loading the ingredients to be processed and a lower outlet 6 for discharging the finished product, equipped with a dispensing tap 5a. The tank 4a houses a stirrer (not visible) to process the product contained therein. A machine of the type described above is the subject of patent EP 0 769 251 by the same applicant, where the presence of a heat exchange pump (hot-cold) may also be inferred, positioned on the lower part of the tank 3 (not visible), and connected to the dispensing tap 5a. With regard to the manual washing and sanitising device 24, with the steam production boiler 33 and the steam dispensing gun 36, the same characteristics described for the machines illustrated in Figures 1 to 4 apply.

The invention described herein achieves the stated aim. The thermal and mechanical action of the jet of steam ensures efficient washing and sanitising of the machine 1.

In addition, the machine 1 in its entirety is compact and functional.

## Claims

1. A machine for making and dispensing food products, such as ice cream products, cake and pastry fillings and the like; the machine (1) comprising a chamber (3) for processing the product to be dispensed, thermal treatment means (20) connected to the chamber (3) and stirring means (17) located inside the chamber (3) for stirring the product being processed and a steam washing and sanitising device (24) equipped with a boiler (33) for producing steam; the machine (1) being **characterised in that** it comprises, in combination, a steam dispenser gun (36) connected to a boiler (33) steam outlet and a flexible element (35), the boiler (33) being connected to the flexible element (35) for feeding the steam dispenser gun (36) .

2. The machine according to claim 1 and comprising an outer casing (2), **characterised in that** the boiler (33) is contained inside the casing (2).

3. The machine according to claim 2, **characterised in that** the steam washing and sanitising device (24) comprises an inlet (25) connected to the water system (26) or to another source of water.

4. The machine according to any of the claims from 1 to 3, **characterised in that** the flexible element (35) can be removed from the casing (2).

5. The machine according to any of the claims from 1 to 4, **characterised in that** the steam dispenser gun (36) emits a concentrated jet of steam at a temperature which is preferably higher than 120°C.

6. The machine according to any of the claims from 1 to 5, **characterised in that** the dispenser outlet of the dispenser gun (36) is fitted with a brush (41).

7. The machine according to any of the claims from 1 to 6, **characterised in that** the chamber (3) for processing the product to be dispensed is formed by a cylinder (4) which has a horizontal axis (A) and is open towards the front (F) of the machine (1) and also by a door (7) which closes the cylinder (4) and which can be opened; the chamber (3) having an upper opening (5) for loading the ingredients to be processed and a lower outlet (6) for discharging the finished product.

8. The machine according to any of the claims from 1 to 7, **characterised in that** the thermal treatment means (20) comprise a refrigerating circuit (21).

9. The machine according to any of the claims from 1 to 8, **characterised in that** the thermal treatment means (20) comprise a heating system (22).

## Patentansprüche

1. Maschine zur Herstellung und Abgabe von Nahrungsmittelprodukten wie Eiscremeprodukten, Kuchen und Teigwarenfüllungen und dergleichen, wobei die Maschine (1) eine Kammer (3) zum Verarbeiten des abzugebenden Produkts, thermische Behandlungsmittel (20), die mit der Kammer (3) verbunden sind, und Rührmittel (17), die sich in der Kammer (3) befinden, zum Rühren des zu verarbeitenden Produkts sowie eine Dampfreinigungs- und -desinfektionsvorrichtung (24) aufweist, ausgestattet mit einem Boiler (33) zur Dampferzeugung, wobei die Maschine (1) **dadurch gekennzeichnet ist, dass** sie in Kombination umfasst: eine Dampfabgabepistole (36), verbunden mit einem Auslass für den Dampf des Boilers (33), und ein flexibles Element (35), wobei der Boiler (33) mit dem flexiblen Element (35) verbunden ist, um die Dampfabgabepistole (36) zu speisen.

2. Maschine nach Anspruch 1, umfassend ein äußeres Gehäuse (2), **dadurch gekennzeichnet, dass** der Boiler (33) im Gehäuse (2) enthalten ist.

3. Maschine nach Anspruch 2, **dadurch gekennzeichnet, dass** die Dampfreinigungs- und -desinfektionsvorrichtung (24) einen Einlass (25) umfasst, der mit dem Wassersystem (26) oder einer anderen Wasserquelle verbunden ist.

4. Maschine nach einem der Ansprüche 1 bis 3, **dadurch gekennzeichnet, dass** das flexible Element (35) vom Gehäuse (2) entfernt werden kann.

5. Maschine nach einem der Ansprüche 1 bis 4, **dadurch gekennzeichnet, dass** die Dampfabgabepistole (36) einen konzentrierten Dampfstrahl bei einer Temperatur, die vorzugsweise höher als 120 °C ist, abgibt.

6. Maschine nach einem der Ansprüche 1 bis 5, **dadurch gekennzeichnet, dass** der Ausgabeauslass der Ausgabepistole (36) mit einer Bürste (41) ausgestattet ist.

7. Maschine nach einem der Ansprüche 1 bis 6, **dadurch gekennzeichnet, dass** die Kammer (3) zum Verarbeiten des abzugebenden Produkts durch einen Zylinder (4) geformt ist, der eine horizontale Achse (A) aufweist und zur Frontseite (F) der Maschine (1) hin offen ist, und auch durch eine Tür (7), die den Zylinder (4) verschließt und die geöffnet werden kann, wobei die Kammer (3) eine obere Öffnung (5) zum Einfüllen der zu verarbeitenden Zutaten und einen unteren Auslass (6) zum Entladen des fertigen Produkts aufweist.

8. Maschine nach einem der Ansprüche 1 bis 7, **dadurch gekennzeichnet, dass** die thermischen Behandlungsmittel (20) einen Kühlkreis (21) umfassen.

9. Maschine nach einem der Ansprüche 1 bis 8, **dadurch gekennzeichnet, dass** die thermischen Behandlungsmittel (20) ein Heizsystem (22) umfassen.

## Revendications

1. Machine pour la fabrication et la distribution de produits alimentaires, tels que des glaces, des gâteaux, des garnitures de tarte et des produits similaires ; la machine (1) comprenant une chambre (3) servant à transformer le produit à distribuer, des moyens de traitement thermique (20) reliés à la chambre (3) et des moyens agitateurs (17) situés à l'intérieur de la chambre (3) servant à agiter le produit étant transformé ainsi qu'un dispositif de lavage et de stérilisation à vapeur (24) équipé d'une chaudière (33) servant à produire de la vapeur ; la machine (1) étant **caractérisée en ce qu'**elle comprend, en combinaison, un pistolet distributeur de vapeur (36) relié à une sortie de vapeur de la chaudière (33) et un élément flexible (35), la chaudière (33) étant reliée à l'élément flexible (35) pour alimenter le pistolet distributeur de vapeur (36).

2. Machine selon la revendication 1 et comprenant une enveloppe extérieure (2), **caractérisée en ce que** la chaudière (33) est contenue à l'intérieur de l'enveloppe (2).

3. Machine selon la revendication 2, **caractérisée en ce que** le dispositif de lavage et de stérilisation à vapeur (24) comprend une entrée (25) reliée au système hydrique (26) ou à une autre source hydrique.

4. Machine selon l'une quelconque des revendications de 1 à 3, **caractérisée en ce que** l'élément flexible (35) peut être retiré de l'enveloppe (2).

5. Machine selon l'une quelconque des revendications de 1 à 4, **caractérisée en ce que** le pistolet distributeur de vapeur (36) émet un jet concentré de vapeur à une température étant de préférence supérieure à 120 °C.

6. Machine selon l'une quelconque des revendications de 1 à 5, **caractérisée en ce que** la sortie de distribution du pistolet distributeur (36) est montée à un balai (41) .

7. Machine selon l'une quelconque des revendications 1 à 6, **caractérisée en ce que** la chambre (3) servant à transformer le produit à distribuer est formée par un cylindre (4) comportant un axe horizontal (A) et étant ouvert sur l'avant (F) de la machine (1) et aussi par une porte (7) refermant le cylindre (4) et pouvant s'ouvrir ; la chambre (3) comportant une ouverture supérieure (5) pour charger les ingrédients à transformer ainsi qu'une sortie inférieure (6) pour décharger le produit fini.

8. Machine selon l'une quelconque des revendications de 1 à 7, **caractérisée en ce que** les moyens de traitement thermique (20) comprennent un circuit réfrigérant (21).

9. Machine selon l'une quelconque des revendications de 1 à 8, **caractérisée en ce que** les moyens de traitement thermique (20) comprennent un système de chauffage (22) .
